**Europäisches Patentamt**

**European Patent Office**

**Office européen des brevets**

(19)

(11) Veröffentlichungsnummer : **0 093 881 B1**

(12) **EUROPÄISCHE PATENTSCHRIFT**

(45) Veröffentlichungstag der Patentschrift :
**12.02.86**

(21) Anmeldenummer : **83103496.2**

(22) Anmeldetag : **11.04.83**

(51) Int. Cl.⁴ : **G 05 B   9/03**, G 06 F 11/20

(54) **Überwachungssystem für eine oder mehrere, gleichartig aufgebaute Prozessstationen.**

(30) Priorität : **23.04.82 DE 3215177**

(43) Veröffentlichungstag der Anmeldung :
**16.11.83 Patentblatt 83/46**

(45) Bekanntmachung des Hinweises auf die Patenterteilung : **12.02.86 Patentblatt 86/07**

(84) Benannte Vertragsstaaten :
**AT CH DE FR GB LI NL SE**

(56) Entgegenhaltungen :
**REGELUNGSTECHNISCHE PRAXIS, Band 22, Nr. 3, März 1980, Seiten 73-104, München, DE., W. SENDLER: "Eine fehlertolerierende Reglerstation auf der Basis eines busorientierten Multi-Mikrorechner-Systems"**
**MICROPROCESSORS & MICROSYSTEMS, Band 5, Nr. 4, Mai 1981, Seiten 153-156, IPC Business Press, Whitstable, Kent, GB., D. BERNHARDT et al.: "Design and implementation of fault-tolerant multi-microcomputer systems"**
**ELEKTRONISCHE RECHENANLAGEN, Jahrgang 20, Nr. 3, Juni 1978, Seiten 115-123, München, DE., S.A. NILSSON: "M3R - Ein modulares Mehrmikrorechner-System mit Restverfügbarkeit und Prozesssicherungsstruktur"**
**Prospekt der Fa. Hartmann + Braun AG., Frankfurt/Main, Nr. 01/70-10 DE 659/10.80 Ca betreffend: "Contronic P. Digitales Automatisierungssystem für die Prozesstechnik"**

(73) Patentinhaber : **Hartmann & Braun Aktiengesellschaft Gräfstrasse 97**
**D-6000 Frankfurt am Main 90 (DE)**

(72) Erfinder : **Hess, Wilfried**
**Brahmsstrasse 18**
**D-6070 Langen (DE)**
Erfinder : **Buxmeyer, Erwin**
**Im Höchsten 52**
**D-6072 Dreieich (DE)**
Erfinder : **Ziegler, Wolfgang**
**Hohlweg 4**
**D-6483 Bad Soden-Salmünster/Mernes (DE)**
Erfinder : **Tremmel, Gerd R.**
**Kleine Nelkenstrasse 14**
**D-6000 Frankfurt am Main 90 (DE)**
Erfinder : **Barthol, Arthur**
**Alt-Niedereschbach 33**
**D-6000 Frankfurt am Main 56 (DE)**

(74) Vertreter : **Mack, Hermann**
**Hartmann & Braun AG Patente und Lizenzen Gräfstrasse 97**
**D-6000 Frankfurt (Main) 90 (DE)**

## Beschreibung

Die Erfindung bezieht sich auf eine Überwachungseinrichtung für eine oder mehrere, gleichartig aufgebaute Prozeßstationen gemäß dem Oberbegriff des Anspruchs 1.

Aus der Druckschrift « 01/70-10 DE 659/10.80 Ca » der Hartmann & Braun AG, Frankfurt am Main : « Contronic P. Digitales Automatisierungssystem für die Prozeßtechnik », Seite 39, linke Spalte, ist ein Überwachungssystem für vier gleichartig aufgebaute Prozeßstationen mit einer Redundanzstation bekannt, die im Fehlerfall die Funktion einer Prozeßstation übernimmt. Die Redundanzstation weist mindestens eine Zentraleinheit mit zugehörigem Speicher auf. Hierbei handelt es sich um die gleichen Bausteine wie bei den zugeordneten Prozeßstationen. Der Stationsbus der Redundanzstation ist mit den Stationsbussen der zugeordneten Prozeßstationen über je einen Redundanzkoppler verbunden. Die Redundanzstation enthält die gleichen Konfigurierungsdaten und Firmware-Bausteine wie die zugeordneten Prozeßstationen. Einzelheiten des Aufbaus des bekannten Überwachungssystems lassen sich dieser Druckschrift jedoch nicht entnehmen.

Der Erfindung liegt die Aufgabe zugrunde, eine Überwachungseinrichtung der eingangs genannten Art zu schaffen, bei der auch im Fehlerfall mit einem einwandfreien Anlagenabbild weitergearbeitet werden kann.

Diese Aufgabe wird erfindungsgemäß durch die im Kennzeichen des Anspruchs 1 angegebenen Merkmale gelöst.

Vorteilhafte Weiterbildungen und Ausgestaltungen der Überwachungseinrichtung nach Anspruch 1 sind in den Ansprüchen 2 bis 8 gekennzeichnet.

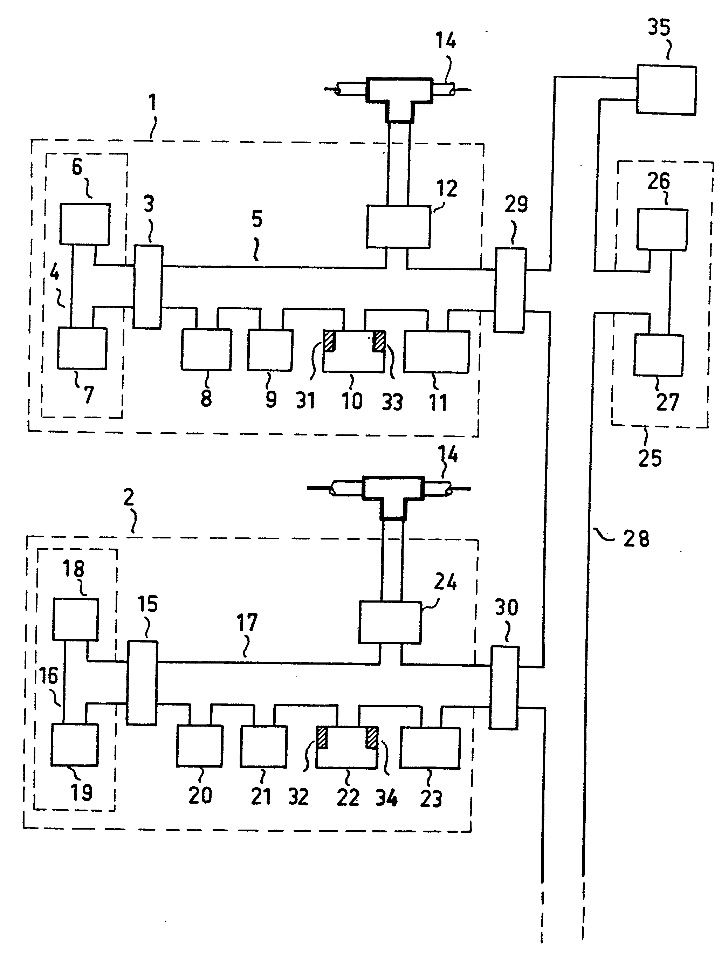

Die Erfindung wird im folgenden mit ihren weiteren Einzelheiten und Vorteilen anhand eines in der Zeichnung dargestellten Ausführungsbeispiels näher erläutert.

Die einzige Zeichnung zeigt ein Blockschaltbild eines Überwachungssystems gemäß der Erfindung. Aus Platzgründen sind nur zwei Prozeßstationen von z. B. vier gleichartig aufgebauten Prozeßstationen dargestellt. Diese Prozeßstationen sind mit den Bezugszeichen 1 und 2 versehen. Die Prozeßstation 1 weist einen bitparallelen Stationsbus auf, der durch einen Redundanzkoppler 3 in zwei Abschnitte 4 und 5 geteilt ist, von denen der erste Abschnitt 4 einer Zentraleinheit 6 und ihrem zugehörigen Speicher 7 zugeordnet ist und der zweite Abschnitt 5 den peripheren Komponenten 8 und 9, zwei Zwischenspeichern 10 und 11 sowie einem Buskoppler 12 zugeordnet ist. Der Buskoppler 12 verbindet die Prozeßstation 1 mit einem bitseriellen Datenbus 14, über den ein Datenaustausch zwischen einzelnen Prozeßstationen bei Bedarf erfolgt. In der Prozeßstation 2, die aus gleichartigen Bausteinen wie die Prozeßstation 1 aufgebaut ist, ist der Redundanzkoppler mit 15 bezeichnet und die beiden Abschnitte des Stationsbusses sind mit 16 und 17 bezeichnet. Der erste Abschnitt 16 des Stationsbusses der Prozeßstation 2 ist einer Zentraleinheit 18 und ihrem zugehörigen Speicher 19 zugeordnet, und der zweite Abschnitt 17 ist den peripheren Komponenten 20 und 21, zwei Zwischenspeichern 22 und 23 sowie einem Buskoppler 24 zugeordnet.

Eine Redundanzstation 25 weist eine Zentraleinheit 26 mit zugehörigem Speicher 27 auf. Hierbei handelt es sich um gleichartige Bausteine wie in den Prozeßstationen 1 und 2. Der Stationsbus 28 der Redundanzstation 25 ist über einen Redundanzkoppler 29 mit dem zweiten Abschnitt 5 des Stationsbusses der Prozeßstation 1 verbunden und über einen weiteren Redundanzkoppler 30 mit dem zweiten Abschnitt 17 des Stationsbusses der Prozeßstation 2 verbunden. In gleicher Weise ist der Stationsbus 28 der Redundanzstation 25 über je einen weiteren Redundanzkoppler mit dem zweiten Abschnitt des Stationsbusses weiterer, hier nicht dargestellten Prozeßstationen verbunden. Der Speicher 27 der Redundanzstation 25 enthält die gleichen Konfigurierungsdaten und Firmware-Bausteine wie der Speicher 7 der Prozeßstation 1, wie der Speicher 19 der Prozeßstation 2 sowie der entsprechenden Speicher der weiteren an den Stationsbus 28 der Redundanzstation 25 angeschlossenen Prozeßstationen. D. h. der Speicher 27 enthält die Konfigurierungsdaten aller an den Stationsbus 28 der Redundanzstation 25 angeschlossenen Prozeßstationen.

In dem Zwischenspeicher 10 ist das aktuelle Anlagenabbild der Prozeßstation 1 gespeichert. In dem Zwischenspeicher 22 ist das aktuelle Anlagenabbild der Prozeßstation 2 gespeichert. In entsprechender Weise ist jeweils in dem ersten Zwischenspeicher jeder der weiteren Prozeßstationen das aktuelle Anlagenabbild dieser Prozeßstation gespeichert. In dem Zwischenspeicher 10 der Prozeßstation 1 ist eine Datenzelle 31 vorgesehen, deren Inhalt die Zentraleinheit 6 im Normalbetrieb zyklisch verändert. In dem Zwischenspeicher 22 der Prozeßstation 2 ist eine Datenzelle 32 vorgesehen, deren Inhalt die Zentraleinheit 18 im Normalbetrieb ebenfalls zyklisch verändert. In den Zwischenspeichern der weiteren Prozeßstationen sind ebenfalls Datenzellen vorgesehen, deren Inhalt die Zentraleinheit der betreffenden Datenstation zyklisch verändert. Zusätzlich zu der zyklischen Veränderung des Inhalts der Datenzelle 31 durch die Zentraleinheit 6 der Prozeßstation 1 erfolgt eine Selbstüberwachung dieser Prozeßstation. Im Rahmen dieser Selbstüberwachung erkannte Fehler legt die Prozeßstation 1 als entsprechende Statusinformation in einer weiteren Datenzelle 33 des Zwischenspeichers 10 ab. In entsprechender Weise erfolgt auch eine Selbstüberwachung der Prozeßstation 2, wobei diese Prozeßstation erkannte Fehler als entsprechende Statusinformation in einer weiteren Datenzelle 34 des Zwischenspeichers 22 ablegt, sowie eine Selbstüberwachung der weiteren, hier nicht dargestellten Prozeßstationen. Im folgenden wird davon ausgegangen, daß die Redundanzstation 25 vier Prozeßstationen, nämlich die Prozeßstationen 1 und 2 sowie zwei weitere, gleichartig aufgebaute Prozeßstationen, die aus Platzgründen nicht in der Zeichnung dargestellt sind, zyklisch überwacht.

Zunächst wird der Fall betrachtet, daß die Redundanzstation 25 die Überwachung der Prozeßstation 1 beendet hat und mit der Überwachung der Prozeßstation 2 beginnt. Die Redundanzstation 25 vergleicht den Inhalt der Datenzelle 32 mit dem Inhalt dieser Datenzelle bei der vorangegangenen Überwachung dieser Prozeßstation. Hat sich der Inhalt der Datenzelle 32 mindestens um einen vorgegebenen Betrag verändert und ist in der Datenzelle 34 keine Statusinformation abgelegt, die einem bei der Selbstüberwachung erkannten Fehler entspricht, so kopiert die Redundanzstation 25 den Inhalt des Zwischenspeichers 22 in den zweiten Zwischenspeicher 23. Dieser Speicherabzug verbleibt in dem Zwischenspeicher 23 mindestens bis zur nächsten Überwachung der Prozeßstation 2. Damit ist die Überwachung der Prozeßstation 2 beendet, und die Überwachung der nächsten Prozeßstation erfolgt in der gleichen Weise. Der Betrag, um den sich der Inhalt der Datenzellen 31 bzw. 32 bis zur nächsten Überwachung bei Normalbetrieb mindestens geändert haben muß, ist systemeinheitlich so gewählt, daß auch bei maximalem Ausbau noch eine vernünftige Überwachung möglich ist.

Der Redundanzkoppler 29, 30 jeder Prozeßstation 1 bzw. 2 überwacht seinerseits die Redundanzstation 25 und verhindert den Zugriff der Redundanzstation 25 auf die ihm zugeordnete Prozeßstation, wenn er einen Fehler erkannt hat.

Stellt die Redundanzstation 25 z. B. bei der Überwachung der Prozeßstation 1 einen Fehlerfall fest, weil sich entweder der Inhalt der Datenzelle 31 nicht genügend gegenüber demjenigen der vorangegangenen Überwachung geändert hat oder weil in der Datenzelle 33 eine Statusinformation abgelegt ist, die einem bei der Selbstüberwachung erkannten Fehler entspricht, so übernimmt die Redundanzstation 25 Funktionen der gestörten Prozeßstation. Die Redundanzstation trennt hierzu den ersten Abschnitt 4 des Stationsbusses der Prozeßstation 1 von seinem zweiten Abschnitt 5 ab und übernimmt die Funktion der abgetrennten Zentraleinheit 6 und des zugehörigen Speichers 7. Wie bereits oben ausgeführt, sind die Konfigurierungsdaten, die in den Speichern 7 und 19 sowie in den entsprechenden Speichern der beiden weiteren Prozeßstationen gespeichert sind, auch in dem Speicher 27 der Redundanzstation 25 gespeichert. Da nicht auszuschließen ist, daß das in dem Zwischenspeicher 10 gespeicherte Anlagenabbild bei einem Fehlerfall ebenfalls fehlerbehaftet ist, greift die Redundanzstation 25 im Fehlerfall nicht auf das im Zwischenspeicher 10 gespeicherte Anlagenabbild, sondern auf das im Zwischenspeicher 11 enthaltene Anlagenabbild zurück und arbeitet mit diesem Zwischenspeicher weiter. Auch nach der Übernahme von Funktionen einer gestörten Prozeßstation überwacht die Redundanzstation die restlichen Prozeßstationen. Bei Störung einer weiteren Prozeßstation kann die Redundanzstation die Funktionen der wichtigsten der gestörten Prozeßstationen übernehmen, während die jeweils weniger wichtigen gestörten Prozeßstation zwangsweise von der Redundanzstation in Handsteuerbetrieb geschaltet werden.

In einer Ausgestaltung der Erfindung ist ein Bedienteil 35 mit dem Stationsbus 28 der Redundanzstation 25 verbunden. Diese Maßnahme ermöglicht es, die Redundanzumschaltung einer von dem Bedienteil 35 aus auswählbaren Prozeßstation, z. B. für Servicearbeiten an der Zentraleinheit und/oder dem zugehörigen Speicher, vorzunehmen. Für diese Redundanzumschaltung ist es nicht erforderlich, daß die Redundanzstation einen Fehlerfall erkannt hat. Unter Redundanzumschaltung ist das Abtrennen des ersten Abschnittes 4 bzw. 16 des Stationsbusses von seinem zweiten Abschnitt 5 bzw. 17 und die Übernahme der Funktion der abgetrennten Zentraleinheit 6 bzw. 18 durch die Zentraleinheit 26 der Redundanzstation 25 zu verstehen, wobei diese auf die in dem zweiten Zwischenspeicher 11 bzw. 23 gespeicherten Daten zurückgreift.

Der Datenverkehr des bitseriellen Datenbusses 14 mit den Prozeßstationen 1, 2 erfolgt über den Buskoppler 12 bzw. 24 zu einem der Zwischenspeicher 10 oder 11 bzw. 22 oder 23. Anhand der Prozeßstation 1 wird im folgenden die Auswahl des Zwischenspeichers beschrieben. Im Normalbetrieb verkehrt der Buskoppler 12, der u. a. die bitseriellen Daten auf dem Datenbus 14 in bitparallele Daten umformt und umgekehrt die bitparallelen Daten des Zwischenspeichers 10 oder 11 in bitserielle Daten umformt, mit dem Zwischenspeicher 10. Bei Übernahme des Betriebs durch die Redundanzstation 25 verkehrt der Buskoppler 12 dagegen mit dem Zwischenspeicher 11. Die Umschaltung zwischen den beiden Zwischenspeichern erfolgt bei der Übernahme des Betriebs durch die Redundanzstation 25 selbsttätig durch ein Steuersignal, das von dem Betriebszustand abhängig ist. Somit ist bei einer Übernahme des Betriebs durch die Redundanzstation keine externe Adressenumrechnung für Informationen, die auf dem bitseriellen Datenbus zugeführt werden, erforderlich.

**Patentansprüche**

1. Überwachungseinrichtung für eine oder mehrere gleichartig aufgebaute Prozeßstationen, von denen jede einen Stationsbus (4, 5 ; 16, 17) sowie eine an diesen angeschlossene Zentraleinheit (6 ; 18) samt zugehörigem Speicher (7 ; 19) und periphere Komponenten (8, 9 ; 20, 21) aufweist, mit

einer zur Übernahme von Funktionen einer gestörten Prozeßstation (1 ; 2) dienenden Redundanzstation (25), die ebenfalls einen Stationsbus (28) sowie eine an diesen angeschlossene Zentraleinheit (26) samt einem dieser zugeordneten Speicher (27) aufweist, in dem die Konfigurierungsdaten und die Firmware-Bausteine einer jeden überwachten Prozeßstation enthalten sind,

jeweils einem ersten Redundanzkoppler (29 ; 30) für jede überwachte Prozeßstation (1 ; 2), über den der Stationsbus (4, 5 ; 16, 17) jeder solchen Station mit dem Stationsbus (28) der Redundanzstation (25) verbunden ist,
dadurch gekennzeichnet, daß

für jede überwachte Prozeßstation (1 ; 2) jeweils ein zweiter Redundanzkoppler (3 ; 15) vorgesehen ist, der so an den Stationsbus der zugeordneten Prozeßstation angeschlossen ist, daß durch ihn ein erster mit der Zentraleinheit (6 ; 18) und deren Speicher (7 ; 19) verbundener Abschnitt (4 ; 16) des Stationsbusses der betreffenden Prozeßstation von einem zweiten, mit den peripheren Komponenten der Prozeßstation und dem dieser Station zugeordneten ersten Redundanzkoppler (29 ; 30) verbundenen Abschnitt (5 ; 17) abkoppelbar ist,

für jede überwachte Prozeßstation (1 ; 2) jeweils zwei an den zweiten Abschnitt (5 ; 17) ihres Stationsbusses angeschlossene Zwischenspeicher (10, 11 ; 22, 23) vorgesehen sind, von denen der eine Aktuelle Werte von Prozeßgrößen und der andere die entsprechenden, zu einem früheren Zeitpunkt angefallenen Werte derselben Größen aufnimmt,

jeder zweite Redundanzkoppler (3 ; 15) durch die Redundanzstation (25) jeweils so gesteuert ist, daß dieser Koppler den jeweiligen ersten Abschnitt (4 ; 16) des Stationsbusses der zugeordneten Prozeßstation im Falle einer Störung dieser Station von dem zweiten Abschnitt (5, 17) abkoppelt,

die Redundanzstation (25) zur Übernahme der Funktionen der an einen abgekoppelten ersten Abschnitt angeschlossenen Zentraleinheit und des ihr zugeordneten Speichers unter Verwendung der in dem anderen Zwischenspeicher (11 ; 23) abgelegten Prozeßgrößen ausgebildet ist.

2. Überwachungseinrichtung nach Anspruch 1, dadurch gekennzeichnet, daß die Redundanzstation (25) zur zyklischen Überwachung der ihr zugeordneten Prozeßstationen (1, 2) und zur Übertragung des Inhalts des einen Zwischenspeichers (10 bzw. 22) in den anderen Zwischenspeicher (11 bzw. 23) ausgebildet ist.

3. Überwachungseinrichtung nach Anspruch 2, dadurch gekennzeichnet, daß jeder erste Redundanzkoppler (29, 30) zur Überwachung der Redundanzstation (25) ausgebildet ist, derart, daß im Fehlerfall der Redundanzstation ein Zugriff der Redundanzstation (25) auf die zugeordnete Prozeßstation (1 ; 2) verhindert wird.

4. Überwachungseinrichtung nach Anspruch 2 oder 3, dadurch gekennzeichnet,
daß jeweils in dem einen Zwischenspeicher (10 ; 22) eine Datenzelle (31 ; 32) vorgesehen ist, deren Inhalt von der Zentraleinheit (6 ; 18) der zugeordneten Prozeßstation (1 bzw. 2) im Normalbetrieb zyklisch verändert wird, und

daß die Redundanzstation (25) die Abkopplung des ersten Abschnitts (4 ; 16) vornimmt, wenn der Inhalt der Datenzelle (31 ; 32) sich bis zur nächsten Überwachung nicht um einen vorgebbaren Betrag geändert hat.

5. Überwachungseinrichtung nach einem der vorhergehenden Ansprüche, dadurch gekennzeichnet,
daß die Redundanzstation (25) zur Erkennung von Fehlern einer Prozeßstation (1 ; 2), die von dieser im Rahmen eines Selbstüberwachungsprogramms durch Ablage einer speziellen Statusinformation in dem einen Zwischenspeicher (10 ; 22) signalisiert werden, und zur Abkopplung des ersten Abschnitts (4 ; 16) aufgrund dieser Statusinformation ausgebildet ist.

6. Überwachungseinrichtung nach einem der vorhergehenden Ansprüche, dadurch gekennzeichnet, daß zur manuellen Steuerung der Entkopplung der Stationsbusabschnitte einer vorgebbaren Prozeßstation (1, 2) ein mit dem Stationsbus (28) der Redundanzstation (25) verbundenes Bedienteil (35) vorgesehen ist.

7. Überwachungseinrichtung nach einem der vorhergehenden Ansprüche, dadurch gekennzeichnet, daß bei Verbindung einer Prozeßstation (1 ; 2) mit einem weiteren Datenbus (14) über einen Buskoppler (12 ; 24) dieser Buskoppler im störungsfreien Betrieb der Prozeßstation mit dem einen Zwischenspeicher (10 ; 22) verkehrt und bei Übernahme des Betriebs durch die Redundanzstation (25) mit dem anderen Zwischenspeicher (11 ; 23) verkehrt.

8. Überwachungseinrichtung nach Anspruch 7, dadurch gekennzeichnet, daß die Auswahl desjenigen Zwischenspeichers (10, 11 ; 22, 23) mit dem der Buskoppler (12 ; 24) verkehrt, durch ein Steuersignal in Abhängigkeit von dem Betriebszustand erfolgt.

**Claims**

1. A monitoring device for one or more process stations of similar construction, each of which comprises a station bus (4, 5 ; 16, 17) as well as a central processing unit (6 ; 18) connected thereto together with associated store (7 ; 19) and peripheral components (8, 9 ; 20, 21), having

a redundancy station (25) which serves to take over functions of a faulty process station (1, 2) and which likewise comprises a station bus (28) as well as a central processing unit (26) connected thereto together with a store (27) associated therewith in which the configuration data and the firmware elements of each monitored process station are contained,

a first redundancy coupler (29 ; 30) in each case for each monitored process station (1 ; 2), through which the station bus (4, 5 ; 16, 17) of each such station is connected to the station bus (28) of the redundancy station (25), characterised in that

for each monitored process station (1 ; 2) there is provided a second redundancy coupler (3 ; 15) which is so connected to the station bus of the associated process station that through it, a first section (4 ; 16) of the station bus of the respective process station, which section is connected to the central processing unit (6 ; 18) and its store (7 ; 19), can be uncoupled from a second section (5 ; 17) connected to the peripheral components of the process station and to the first redundancy coupler (29 ; 30) associated with this station,

for each monitored process station (1 ; 2) there are provided two intermediate stores (10, 11 ; 22, 23) each connected to the second section (5 ; 17) of its station bus and of which the one contains current values of process quantities and the other contains the corresponding values of the same quantities obtained at an earlier moment,

each second redundancy coupler (3 ; 15) is so controlled by the redundancy station (25) that this coupler uncouples the particular first section (4 ; 16) of the station bus of the associated process station from the second section (5 ; 17) in the event of a disturbance of this station,

the redundancy station (25) is adapted to take over the functions of the central processing unit connected to an uncoupled first section and of the store associated therewith, using the process quantities filed in the other intermediate store (11 ; 23).

2. A monitoring device as claimed in Claim 1, characterised in that the redundancy station (25) is adapted for the cyclic monitoring of the process stations (1, 2) associated therewith and to transfer the contents of the one intermediate store (10 or 22) into the other intermediate store (11 or 23).

3. A monitoring device as claimed in Claim 2, characterised in that each first redundancy coupler (29, 30) is adapted to monitor the redundancy station (25) in such a manner that in the event of a fault in the redundancy station, access to the associated process station (1, 2) by the redundancy station (25) is prevented.

4. A monitoring device as claimed in Claims 2 or 3, characterised in that,

a data cell (31 ; 32) is provided in the one intermediate store (10 ; 22) in each case, the contents of which data cell are altered cyclically by the central processing unit (6 ; 18) of the associated process station (1 or 2) in normal operation and

that the redundancy station (25) effects the uncoupling of the first section (4 ; 16) if the contents of the data cell (31 ; 32) have not altered by a preset amount by the next monitoring.

5. A monitoring device as claimed in any one of the preceding Claims, characterised in that

the redundancy station (25) is adapted to detect faults in a process station (1, 2) which are signalled thereby in the course of a self-monitoring program by filing special status information in the one intermediate store (10 ; 22), and to uncouple the first section (4 ; 16) as a result of this status information.

6. A monitoring device as claimed in any one of the preceding Claims, characterised in that a control means (35), which is connected to the station bus (28) of the redundancy station (25), is provided for the manual control of the uncoupling of the station-bus sections of a predetermined process station (1, 2).

7. A monitoring device as claimed in any one of the preceding Claims, characterised in that, when one process station (1 ; 2) is connected to a further data bus (14) through a bus coupler (12 ; 24), this bus coupler communicates with the one intermediate store (10 ; 22) when the process station is operating without disturbance and communicates with the other intermediate store (11 ; 23) when operation is taken over by the redundancy station (25).

8. A monitoring device as claimed in Claim 7, characterised in that the selection of that intermediate store (10, 11 ; 22, 23) with which the bus coupler (12 ; 24) communicates is effected by a control signal depending on the operating state.

**Revendications**

1. Installation de surveillance pour un ou plusieurs postes de traitement, ayant une construction, analogues, parmi lesquels chacun comporte un bus de poste (4, 5 ; 16, 17) une unité centrale (6, 18) reliée à ce bus, la mémoire correspondante (7, 19) et des composants périphériques (8, 9 ; 20, 21), avec :

un poste redondant (25) servant à prendre les fonctions d'un poste de traitement (1, 2) en dérangement, poste redondant qui comporte également un bus de poste (28) ainsi qu'une unité centrale (26) reliée à celui-ci avec une mémoire (27) associée à cette unité, et dont les données de configuration et les composants de circuit sont contenus dans chaque poste de traitement, surveillé,

chaque fois un premier coupleur redondant (29, 30) pour chaque poste de traitement (1, 2) surveillé, par lequel le bus de poste (4, 5 ; 16, 17) de chaque tel poste est relié au bus de poste (28) du poste redondant (25) ; caractérisé en ce que :

pour chaque poste de traitement (1, 2) surveillé, on a chaque fois un second coupleur redondant (3, 15) qui est relié au bus du poste de traitement correspondant, de façon que par celui-ci on puisse coupler un premier segment (4, 16) de bus du poste de traitement correspondant, avec l'unité centrale (6, 18) et sa mémoire (7, 19) à partir d'un second segment (5, 17) relié au composant périphérique du poste de traitement et au premier coupleur redondant (29, 30) associé à ce poste ;

pour chaque poste de traitement (1, 2) surveillé, on a chaque fois deux mémoires intermédiaires (10, 11 ; 22, 23) reliées au second segment (5, 17) de son bus de poste, mémoires dont l'une reçoit les valeurs réelles des grandeurs de traitement et l'autre les grandeurs correspondantes fournies à un instant antérieur ;

chaque second coupleur redondant (3, 15) est commandé par le poste redondant (25), chaque fois de façon que ce coupleur coupe le premier segment respectif (4, 16) du bus du poste de traitement correspondant par rapport au second segment (5, 17) en cas de défaillance de ce poste :

pour prendre les fonctions de l'unité centrale reliée au premier segment qui a été coupé et de la mémoire correspondante, le poste redondant (25) est réalisé en utilisant les grandeurs de traitement enregistrées dans l'autre mémoire intermédiaire (11, 23).

2. Installation suivant la revendication 1, caractérisée en ce que le poste redondant (25) est réalisé de façon à surveiller cycliquement les postes de traitement (1, 2) qui lui sont associés et pour transférer le contenu de l'une des mémoires intermédiaires (10, 22) à l'autre mémoire intermédiaire (11, 23).

3. Installation de surveillance suivant la revendication 2, caractérisée en ce que chaque premier coupleur redondant (29, 30) est réalisé pour surveiller le poste redondant (25) de façon qu'en cas d'erreur du poste redondant on évite un accès du poste redondant (25) au poste de traitement (1, 2) correspondant.

4. Installation de surveillance selon la revendication 1 ou 3, caractérisée en ce que chaque fois dans une mémoire intermédiaire (10, 22) on a une cellule de données (31, 32) dont le contenu est modifié par l'unité centrale (6, 18) du poste de traitement correspondant (1, 2) de façon cyclique en fonctionnement normal et :

en ce que le poste redondant (25) effectue la séparation du premier segment (4, 16) lorsque le contenu de la cellule de donnée (31, 32) n'a pas changé d'une valeur prédéterminée jusqu'à la surveillance suivante.

5. Installation de surveillance selon l'une des revendications précédentes, caractérisée en ce que :

le poste redondant (25) est réalisé pour reconnaître des erreurs d'un poste de traitement (1, 2) qui sont signalées par ce poste dans le cadre d'un programme de surveillance par enregistrement d'une information d'état particulière dans la seconde mémoire intermédiaire (10, 22) et pour la coupure du premier segment (4, 16) sur la base de cette information d'état.

6. Installation de surveillance selon l'une des revendications précédentes, caractérisée en ce que pour la commande manuelle du découplage des segments de bus de poste par rapport à un poste de traitement (1, 2) prédéterminé, il est prévu une partie de commande (35) reliée par le bus de poste (28) du poste redondant (25).

7. Installation de surveillance selon l'une des revendications précédentes, caractérisée en ce que lors de l'établissement de la liaison entre un poste de traitement (1, 2) et un autre bus de donnée (14) par un coupleur de bus (12, 24), ce coupleur de bus communique avec la mémoire intermédiaire (10, 22) en fonctionnement sans dérangement du poste de traitement et lors de la prise du fonctionnement par le poste redondant (25), il communique avec l'autre mémoire intermédiaire (11, 23).

8. Installation de surveillance selon la revendication 7, caractérisée en ce que le choix de la mémoire intermédiaire (10, 11, 22, 23) correspondant avec laquelle communique le coupleur de bus (12, 24) se fait par un signal de commande suivant l'état de fonctionnement.